# EUROPÄISCHE PATENTSCHRIFT

(11) **EP 4 307 152 B1**
(45) Veröffentlichungstag und Bekanntmachung des Hinweises auf die Patenterteilung: **12.08.2026**
(21) Anmeldenummer: 22185169.4
(22) Anmeldetag: 15.07.2022
(51) Int. Cl.: G06F 21/62, G06F 21/64

(54) **SICHERUNG UND AUTHENTIFIZIERUNG EINES PERSÖNLICHEN IDENTITÄTSDOKUMENTS**
SECURING AND AUTHENTICATING OF A PERSONAL IDENTITY DOCUMENT
SÉCURITÉ ET AUTHENTIFICATION D'UN DOCUMENT D'IDENTITÉ

(43) Veröffentlichungstag der Anmeldung: 17.01.2024
(73) Patentinhaber: Österreichische Staatsdruckerei GmbH, 1239 Wien (AT)
(72) Erfinder: BRANDL, Stefan, 2521 Trumau (AT); HARRINGER, Stefan, 1120 Wien (AT); HUMPLIK, Florian, 1220 Wien (AT); KOFLER, Robert, 1220 Wien (AT)
(74) Vertreter: SONN Patentanwälte GmbH & Co KG

(56) Entgegenhaltungen:
- EP-A1- 2 048 867
- US-A1- 2012 125 997
- KHAN RIAZ A ET AL: "A comprehensive study of document security system, open issues and challenges", MULTIMEDIA TOOLS AND APPLICATIONS, vol. 80, no. 5, 24 October 2020 (2020-10-24), pages 7039 - 7061, XP037379523, ISSN: 1380-7501, DOI: 10.1007/S11042-020-10061-X

## Beschreibung

Die Erfindung betrifft ein Verfahren zur Sicherung eines persönlichen Identitätsdokuments, wobei das Identitätsdokument mit einem maschinenlesbaren grafischen Code ausgestattet wird, der einen Dateninhalt repräsentiert, wobei der Dateninhalt Nutzdaten und Kontrolldaten umfasst, wobei die Nutzdaten mindestens einen Feldinhalt des Identitätsdokuments umfassen, wobei zur Ermittlung eines Kontrollcodes eine Hashfunktion zumindest auf die Nutzdaten angewendet wird. Außerdem betrifft die Erfindung ein Identitätsdokument zum Nachweis der Identität einer Person, wobei das Identitätsdokument einen maschinenlesbaren grafischen Code aufweist, der einen Dateninhalt repräsentiert, wobei der Dateninhalt Nutzdaten und Kontrolldaten umfasst, wobei die Nutzdaten mindestens einen Feldinhalt des Identitätsdokuments umfassen. Bei der Ermittlung des Kontrollcodes wird dieser auf Basis der Nutzdaten erzeugt unter Anwendung der Hashfunktion, beispielsweise wird ein Ergebnis der Hashfunktion aus den Nutzdaten berechnet. Als Identitätsdokument wird in diesem Zusammenhang ein physisches Dokument verstanden. Die Art der Herstellung des physischen Dokuments ist per se unerheblich. Es kann beispielsweise gedruckt, gelasert, gestanzt oder geprägt sein.

Machine Readable Travel Documents (MRTDs) welche für den internationalen Reiseverkehr benutzt werden haben hohen Schutzbedarf. Aktuell werden diese durch mehrere Sicherheitsmerkmale sowohl physisch als auch digital geschützt. Viele dieser Maßnahmen sind in der ICAO 9303 international spezifiziert. Diese Dokumente sind etablierte hoheitliche Trust Anchor für rechtliche Belange rund um Identität und ermöglichen dadurch die Teilnahme von Bürgern am öffentlichen Leben, freien Markt sowie internationalen Grenzübertritten. Nicht zuletzt erhöht auch die Entwicklung zu eGovernemnt und die fortschreitende Digitalisierung die Notwendigkeit für sicher nachweisbare Identitätsdokumenten.

Klassische physische, und öffentlich bekannte Sicherheitsfeatures, sind zum Beispiel Sicherheitsfäden, Gouillochen, DOVIDs, usw. Diese Features sichern ein Identitätsdokument (z.B. einen Reisepass) gegen physische Manipulation, Duplizierung oder totale Fälschung. Darüber hinaus dienen digitale Schutzmaßnahmen mittels kryptographischer Signaturen als weitere Absicherung der personenbezogenen Daten und sind ein wichtiges Feature zur Sicherung der Authentizität und Integrität des Dokuments. In Österreich und vielen anderen Ländern ist deshalb ab 2006 der sogenannte Chip-Pass eingeführt worden. Der Chip besitzt ebenso mehrere Sicherheitslayer, wie zum Beispiel Klonschutz, Zugriffsschutz und weitere physikalische Features.

Die Prüfung des Chips und der darin enthaltenen personenbezogenen Daten bietet einen umfassend sicheren, maschinengestützten und bewährten Prozess der Identitätsprüfung, welcher zu einem internationalen Standard geworden ist. Nichtsdestotrotz hat die Verwendung des Chips Nachteile in der Nutzung bzw. Limitierungen beim Schreiben und Auslesen der ChipDaten: Das Auslesen von Chipdaten mittels NFC ist fehlerbehaftet im Verbindungsaufbau und der Anwendung - kontaktbehaftete Chip-Schnittstellen unterliegen Verschleiß. Bei mobilen Auslesegeräten ist die Aufrechterhaltung der Positionierung des Dokuments während der Dauer des Auslesens nicht mit festinstallierten Scannern vergleichbar. Der Chip hat durch seine physikalischen Eigenschaften Limitierungen in der Performance beim Auslesen und Schreiben. Für eine Auslesbarkeit benötigt das Identitätsdokument sowohl einen funktionierenden Chip als auch eine unbeschädigte Antenne. Mutwillige Beschädigungen sind nicht leicht erkennbar und/oder nachweisbar. Die verwendeten kryptografischen Algorithmen sind nach aktueller Einschätzung nicht Post-Quantum-Secure, d.h. mit einem zukünftig entwickelten Quantencomputer angreifbar. Zugleich sind die im Chip verwendeten Algorithmen nicht leicht austauschbar, wenn die Dokumente im Feld sind. Die Auswahl und Verfügbarkeit der möglichen Algorithmen kann durch die Chiparchitektur eingeschränkt sein. Ein Wechsel der Chiptechnologie (z.B. Updates des Chip Betriebssystems) geht mit enormem Aufwand einher.

Um diese Nachteile zu adressieren und die Unabhängigkeit von elektronischen Technologien zu erreichen, bieten sich Sicherheitsmerkmale an, die druckbar im Dokument eingebracht werden können. Dafür kommt beispielsweise der eingangs erwähnte maschinenlesbare grafische Code infrage, der einen Dateninhalt repräsentiert, wobei der Dateninhalt Nutzdaten und Kontrolldaten umfasst, wobei die Nutzdaten mindestens einen Feldinhalt des Identitätsdokuments umfassen, wobei zur Ermittlung eines Kontrollcodes eine Hashfunktion zumindest auf die Nutzdaten angewendet wird. Der maschinenlesbare grafische Code kann z.B. ein gedruckter oder gelaserter zweidimensionaler (2D) Code sein, wie ein QR-Code oder ein Data Matrix Code. In dem maschinenlesbaren grafischen Code transkribiert befinden sich zum einen personenbezogene Daten, mit denen sich eine Person eindeutig identifizieren lässt. Die Nutzdaten, insbesondere die enthaltenen personenbezogenen Daten, können, analog den Daten des Chips, hinreichend sein, um die Identität des Dokumentinhabers sicherzustellen.

Durch den maschinenlesbaren grafischen Code kann beispielsweise ein komplementärer Sicherheitslayer zu einem Chip des Identitätsdokuments geschaffen werden. Sollte der Chip oder die Antenne beschädigt oder aus anderen Gründen nicht mehr lesbar sein, kann über den maschinenlesbaren grafischen Code eine valide Personenidentifikation durchgeführt werden. Das Auslesen eines grafischen Codes mittels Maschinen unterliegt nicht den zuvor genannten Einschränkungen eines Chips. Dadurch ist der grafische Code - mit geeigneten Sicherheitsmerkmalen - allenfalls ein weiterer zusätzlicher Trust-Anchor neben einem Chip und dem Identitätsdokument selbst.

Da zukünftige Entwicklungen im Bereich der Quantencomputer bereits jetzt darauf schließen lassen, dass asymmetrische kryptographische Verfahren nurmehr mit sehr großen Schlüsselräumen, und damit notwendig größeren Bildräumen, sicher sein werden, ist es gerade für die Verwendung in maschinenlesbaren grafischen Codes auf Identitätsdokumenten wegen deren relativ langer Gültigkeitsdauer sinnvoll, eine Alternative zu diesen Verfahren zu implementieren.

Aktuell gibt es zwei Verfahren, die Kryptographie mit einem Quantencomputer angreifbar macht. Shors Algorithmus bricht insbesondere Elliptische-Kurven-Kryptographie und ermöglicht eine Rückrechnung auf den geheimen Schlüssel aus der Signatur gemeinsam mit dem öffentlichen Schlüssel in sehr kurzer Zeit im Vergleich zur Laufzeit eines Identitätsdokuments. Dies würde bedeuten, dass ein Angreifer beliebige Nutzdaten ununterscheidbar zum Dokumentenersteller signieren kann. Grovers Algorithmus greift bestehende Hashfunktionen an, und kann eine Hash-Kollision (ein zweiter Eingangswert liefert denselben Hashwert) finden. Grovers Algorithmus führt nicht zwingend zu einem sofortigen "Brechen" der Hashfunktion, sondern liefert primär eine Effizienzsteigerung im Gegensatz zu klassischen "exhaustive search"-Algorithmen. Um sich gegen Grovers Algorithmus zu schützen, reicht es wenn der Bildraum der Hash Funktion erhöht wird. Aus heutiger Sicht gilt ein 512 bit Bildraum als ausreichend sicher.

Vor diesem Hintergrund ist das technische Gebiet des eingangs erwähnten Verfahrens und Identitätsdokuments zu verstehen, auf dem die offenbarte Erfindung liegt.

Eine Möglichkeit zur Absicherung von Identitätsdokumenten mit einem maschinenlesbaren grafischen Code, genauer mit Barcodes, ist in der US 10,931,461 B beschrieben. Allerdings ist dort das Identitätsdokument nicht mit einem maschinenlesbaren grafischen Code ausgestattet, sondern der Code gehört zu einer digitalen Kopie des Dokuments, die mittels einer Mobilanwendung verwendet werden kann. Zudem enthält der Code keinen Feldinhalt des Identitätsdokuments, sondern lediglich eine Referenz auf die besagte digitale Kopie, die damit aus einer externen Datenbank abgerufen werden kann.

Die WO 2020/245024 A1 zeigt - allerdings nicht speziell für Identitätsdokumente, sondern für allgemeine Schriftstücke - die Verwendung eines maschinenlesbaren grafischen Codes zur Absicherung eines physischen Dokuments. Dabei wird eine Hashfunktion auf verschiedene Abschnitte des Dokuments angewendet, sodass mehrere Hashwerte berechnet werden, die aufgrund der verschiedenen Payloads unterschiedlich sind. Die zusammengeführten Hashwerte bilden einen Kontrollcode, der zur späteren Überprüfung in einer Datenbank hinterlegt wird.

Auf einem anderen technischen Gebiet, der Suche nach digitalen Daten, schlägt die US 8,171,004 B vor, mehrere Hashwerte verschiedener Hashfunktionen aneinander zu reihen, um das Ergebnis gegen Kollisionen zu härten. Diese Veröffentlichung enthält keinen Hinweis auf eine Anwendung in Identitätsdokumenten, geschweige denn in Kombination mit maschinenlesbaren grafischen Codes (wie Barcodes oder QR-Codes).

Ebenfalls auf einem anderen technischen Gebiet, der fehlerfreien Übertragung von Informationen mittels Blockchain-Technologie, beschreibt die US 2021/0099309 A1 eine Verwendung mehrerer verschiedener Hashwerte, entweder auf Basis einer abwechselnd invertierten Payload oder auch auf Basis unterschiedlicher Hashfunktionen, um die Sicherheit gegenüber Kollisionen zu erhöhen. Auch diese Veröffentlichung enthält allerdings keinen Hinweis auf die Anwendung der beschriebenen technischen Maßnahmen auf den Inhalt eines maschinenlesbaren grafischen Codes (wie Barcodes oder QR-Codes) zur Absicherung von gedruckten Identitätsdokumenten.

Wie gezeigt wurde, liegen die beiden zuletzt genannten Dokumente, die US 8,171,004 B und die US 2021/0099309 A1, jeweils auf anderen technischen Gebieten als diese Offenbarung und betreffen daher naturgemäß völlig andere Aufgaben. Daher hätte der Fachmann auf der Suche nach Möglichkeiten für einen sicheren Austausch von physischen Identitätsdokumenten nicht hoffen können, in einer dieser Veröffentlichungen eine Lösung zu finden.

Es ist eine Aufgabe der Erfindung, einen gesicherten Widerruf und Austausch von Identitätsdokumenten zu ermöglichen, beispielsweise wenn eine Schwäche der für den Kontrollcode verwendeten Hashfunktion bekannt wird. Zu keinem Zeitpunkt sollen Nutzdaten exponiert werden, insbesondere auch nicht während eines solchen Austausches. Weiters soll zu jedem Zeitpunkt eine möglichst gute "Post-Quantum Security" gewährleistet bleiben.

Das erfindungsgemäße Verfahren sieht vor, dass die Kontrolldaten einen digitalen Schlüssel umfassen, und dass der Kontrollcode mindestens zwei Codeabschnitte aufweist, wobei zur Ermittlung der beiden Codeabschnitte jeweils verschiedene Hashfunktionen basierend auf verschiedenen Hash-Algorithmen auf den Dateninhalt (d.h. die Kombination oder Gesamtheit von Nutzdaten und Kontrolldaten) angewendet werden. Es werden somit dieselben Daten (derselbe "Payload") mit verschiedenen Hashfunktionen gehasht.

In entsprechender Weise sieht das erfindungsgemäße Identitätsdokument vor, dass die Kontrolldaten mindestens einen digitalen Schlüssel umfassen, wobei der digitale Schlüssel unabhängig von den Nutzdaten ist, und dass dem Identitätsdokument ein Kontrollcode zugeordnet ist, der mindestens zwei Codeabschnitte aufweist, welche mittels jeweils verschiedener Hashfunktionen basierend auf verschiedenen mathematischen Algorithmen und angewendet auf den Dateninhalt ermittelt wurden. Insbesondere ist der digitale Schlüssel nicht aus den Nutzdaten abgeleitet. Der digitale Schlüssel kann zum Beispiel für jedes Dokument neu mit einem kryptografischen Zufallsgenerator generiert werden.

Die Verwendung eines vom ersten Hash-Algorithmus (auf dem der erste Codeabschnitt basiert) verschiedenen zweiten Hash-Algorithmus für den zweiten Codeabschnitt bedeutet, dass beide Sicherheitsmerkmale die bekannten potentiellen Schwächen der asymmetrischen Kryptographie vermeiden. Zugleich wird die Sicherheit gegenüber der Verwendung nur eines Hash-Algorithmus erhöht. Sollte ein neuer Angriff auf einen Hash-Algorithmus bekannt werden, bleibt die Sicherheit des jeweils anderen Hash-Algorithmus unbeeinträchtigt. Beispielsweise kann der nunmehr weniger sichere Hash-Algorithmus durch einen dritten, von den ersten beiden verschiedenen Hash-Algorithmus ersetzt werden. Die Sicherheit des Identitätsdokuments wäre somit nur dann beeinträchtigt, wenn zufällig gleichzeitig neue Angriffe auf beide (oder alle) der verwendeten verschiedenen Hash-Algorithmen bekannt würden. Man erhält somit dank der Erfindung praktisch ein Zeitfenster, um die gebrochene Hashfunktion durch eine andere, noch nicht gebrochene, sowohl bei der Produktion als auch im Prüfprozess zu ersetzen. Darüber hinaus wird unabhängig von neuen Angriffen die Suche nach Hashkollisionen deutlich erschwert, über das Ausmaß einer schlichten Vergrößerung der Bildmenge nur eines Hash-Algorithmus hinaus.

Bei dem beschriebenen Identitätsdokument kann der Bildraum des digitalen Schlüssels dem Bildraum mindestens einer für die Sicherung des Identitätsdokuments verwendbaren (oder verwendeten) Hashfunktion entsprechen. Ein größerer Bildraum des digitalen Schlüssels könnte Angriffe auf die Hashfunktion erleichtern. Um seine Funktion optimal zu erfüllen, sollte der Bildraum aber gleichzeitig nicht zu klein gewählt werden. Der digitale Schlüssel hat unter anderem die Funktion, einen deterministischen Zusammenhang zwischen den Nutzdaten und jedem der Codeabschnitte zu vermeiden. Damit wird verhindert, dass aus den - möglicherweise öffentlich zugänglichen - Codeabschnitten auf die - typischerweise personenbezogenen und sensiblen - Nutzdaten und Feldinhalte des Identitätsdokuments zurück geschlossen werden kann. Die Größe des Bildraums kann auch als Vorgabe an die Wahl der verwendeten Hashfunktionen verwendet werden, wobei die Kardinalzahlen der Bildräume aller gewählten Hashfunktionen gleich sein sollen.

Für die Auswahl der Hashfunktionen können neben der Größe des Bildraumes die leichte Austauschbarkeit und verfügbare Informationen über die Post-Quanten-Sicherheit als relevante Parameter berücksichtigt werden. Es können beispielsweise Hashfunktionen aus den vom NIST standardisierten Gruppen Secure Hash Algorithm 2 (SHA-2) oder Secure Hash Algorithm 3 (SHA-3) verwendet werden.

Optional kann jeder einzelne der Codeabschnitte mit einem Verfahren für Message Authentication Codes ermittelt werden. Insbesondere können die mindestens zwei (oder alle) Codeabschnitte mit verschiedenen Verfahren für Message Authentication Codes ermittelt werden. Da die Nutzdaten eines Identitätsdokuments besonders schützenswerte personenbezogene Daten enthalten können, sollte es für einen Angreifer auch bei gebrochenen Hashfunktionen nicht möglich sein, auf die Nutzdaten rückzurechnen bzw. rückzuschließen. Diesen Schutz bieten Message Authentication Codes auf natürliche Weise, weil sie speziell für die Verwendung mit einem digitalen Schlüssel konzipiert sind.

Beispielsweise kann im Rahmen des offenbarten Verfahrens mindestens einer der beiden Codeabschnitte als Keyed-Hash Message Authentication Code (HMAC) ermittelt werden. Analog kann bei dem offenbarten Identitätsdokument mindestens einer der beiden Codeabschnitte beispielsweise ein Keyed-Hash Message Authentication Code (HMAC) sein. HMAC wird im RFC 2104 "HMAC: Keyed-Hashing for Message Authentication" der Internet Engineering Task Force (IETF) und FIPS 198 "The Keyed-Hash Message Authentication Code (HMAC)" des National Institute of Standards and Technology (NIST) spezifiziert. Wenn mehr als ein Codeabschnitt als HMAC ermittelt wird, würden verschiedene HMACs, d.h. auf Basis unterschiedlicher Hashfunktionen verwendet werden.

Alternativ oder zusätzlich kann im Rahmen des offenbarten Verfahrens mindestens einer der beiden Codeabschnitte beispielsweise als KECCAK Message Authentication Code (KMAC) ermittelt werden bzw. im Rahmen des offenbarten Identitätsdokuments beispielsweise ein KECCAK Message Authentication Code (KMAC) sein. KMAC ist in NIST SP800-185 "SHA-3 Derived Functions: cSHAKE, KMAC, TupleHash, and ParallelHash" spezifiziert. Im folgenden Text wird zur besseren Verständlichkeit KMAC als zweiter MAC Algorithmus angeführt.

Nach einem Anwendungsbeispiel kann ein Datenblock umfassend den Kontrollcode (mit den mindestens zwei Codeabschnitten) erstellt werden und der Datenblock in einer Datenbank gespeichert werden. Die Datenbank kann zur Verifizierung des so gesicherten Identitätsdokuments verwendet werden. Dazu wird die Datenbank von einem vertrauenswürdigen Betreiber betrieben und ist für interessierte oder legitimierte Stellen zugänglich.

Zusätzlich können die in der Datenbank gespeicherten Datenblöcke durch Nutzung von Hashwerten untereinander verkettet werden. Dies hat den Vorteil, dass eine überprüfende Instanz nur vertrauen muss, dass zum Erstellungszeitpunkt ein authentischer Datenblock hinterlegt wurde. Nachdem alle späteren Datenblöcke darauf basieren, ist eine nachträgliche Manipulation an einem oder mehreren der Datenblöcke praktisch ausgeschlossen. Auch für die Verkettung können - analog zum Kontrollcode - mindestens zwei verschiedene Hashfunktionen auf den (zu speichernden) Kontrollcode und eine Referenz des jeweils vorangegangenen Datenblocks angewendet werden und eine Referenz umfassend die Ergebnisse beider Hashfunktionen in den neuen Datenblock aufgenommen werden - zusammen mit zumindest dem zu speichernden Kontrollcode.

In diesem Kontext kann die Datenbank beispielsweise ein zentrales Register sein und das Speichern des Datenblocks ein Hochladen des Datenblocks über ein Computernetzwerk in das zentrale Register umfassen.

Allgemein können die Kontrolldaten bei dem oben beschriebenen Verfahren bzw. Identitätsdokument optional zusätzlich mindestens eine kryptografische Signatur eines Ausstellers des Identitätsdokuments umfassen. Die Signatur ist dabei z.B. über die Nutzdaten gebildet. Diese kryptografische Signatur ist ein ergänzendes Sicherheitsmerkmal. Der Kontrollcode erfüllt seine Sicherungsfunktion grundsätzlich unabhängig von einer etwaigen zusätzlichen kryptografischen Signatur. Die kryptografische Signatur kann daher im Allgemeinen weggelassen werden, beispielsweise um die Datenmenge der Kontrolldaten zu verringern. Die Datenmenge spielt beispielsweise für eine grafische Wiedergabe eine Rolle (z.B. als 1D oder 2D Barcode), wobei kleinere Datenmengen einfacher und robuster grafisch wiedergegeben werden können.

Die Verwendung einer kryptografischen Signatur (oder digitalen Signatur) ist angelehnt an die Authentizitätsprüfung mithilfe eines elektronischen Chips des Identitätsdokuments. Es kann beispielsweise eine digitale Signatur via Elliptic Curve Digital Signature Algorithm (ECDSA) verwendet werden. Die zugrundeliegenden Zertifikate können von einer public key infrastructure (PKI) abgeleitet werden und mit Ablaufdaten für einen regelmäßigen Tausch vorgesehen sein. Auch wenn Elliptic Curve Cryptography (ECC) nach aktuellem Kenntnisstand nicht ohne Anpassungen "post-quantum secure" ist (wie einleitend diskutiert), kann es zweckmäßig sein, derartige Sicherheitsmerkmale als zusätzliche Absicherung der Dokumente neben dem oben beschriebenen Kontrollcode vorzusehen. Insbesondere ergibt sich durch den fundamental anderen Algorithmus eine Verbesserung der Resilienz, alleine schon wegen der Redundanz.

Gemäß einem speziellen Anwendungsbeispiel des oben beschriebenen Verfahrens bzw. Identitätsdokuments können die Nutzdaten Bilddaten eines Porträts einer durch das Identitätsdokument identifizierten Person enthalten. Die Sicherheitseigenschaften des verwendeten Kontrollcodes und dessen Codeabschnitte können somit auf das Porträt, das ein maßgebliches und oft das einzige Merkmal für eine visuelle Authentifizierung einer durch das Identitätsdokument identifizierten Person ist, ausgedehnt werden. Dadurch kann die Sicherheit dieser Funktion des Identitätsdokuments durch die oben beschriebenen Maßnahmen entsprechend verbessert werden.

Die Erfindung wird nachfolgend anhand eines besonders bevorzugten Ausführungsbeispiels, auf das sie jedoch nicht beschränkt sein soll, und unter Bezugnahme auf die Zeichnungen noch weiter erläutert. Die Zeichnungen zeigen im Einzelnen:
Fig. 1 schematisch ein Identitätsdokument mit einem maschinenlesbaren grafischen Code;
Fig. 2 schematisch ein System mit drei Identitätsdokumenten gemäß Fig. 1, jeweils dargestellt als Dateninhalt des maschinenlesbaren grafischen Codes, und mit einer zentralen Datenbank mit den Identitätsdokumenten zugeordneten Datenblöcken; und
Fig. 3 schematisch einen Datenblock gemäß Fig. 2.

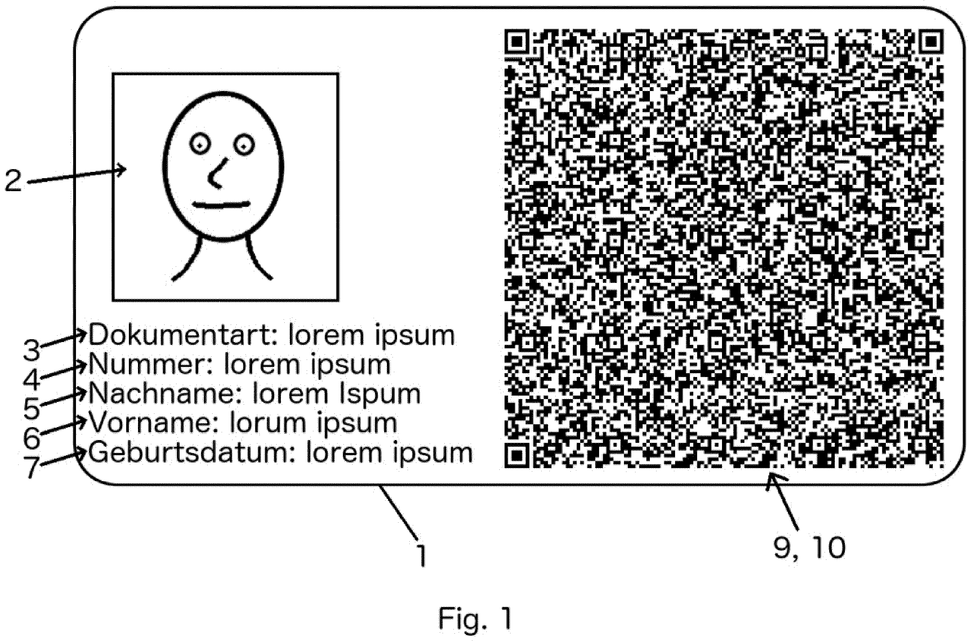

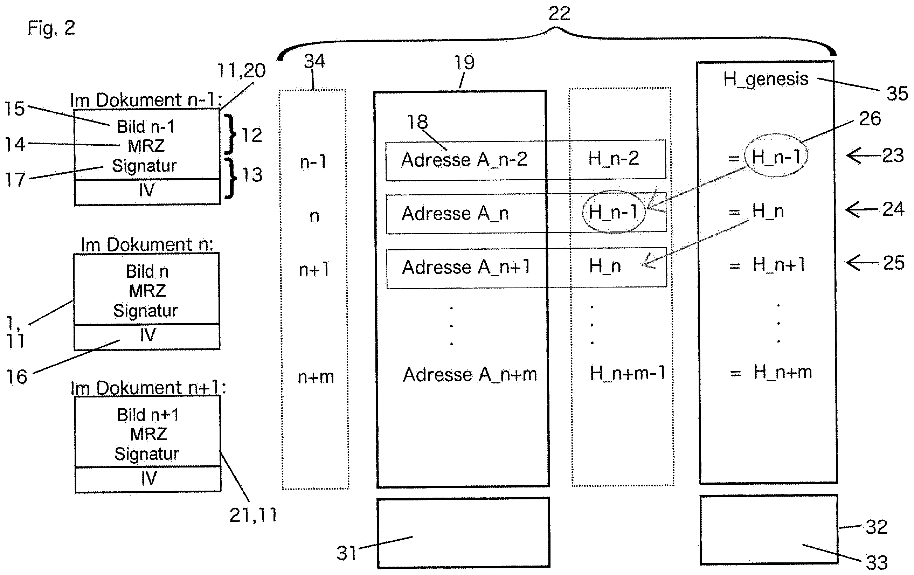

Fig. 1 zeigt schematisch ein Identitätsdokument 1 zum Nachweis der Identität einer Person. Das Identitätsdokument 1 weist ein Porträt 2 einer durch das Identitätsdokument identifizierten Person, einige Datenfelder 3-7 mit personenbezogenen Daten dieser Person und einen maschinenlesbaren grafischen Code 9 in Form eines QR-Codes 10 auf. Der QR-Code 10 repräsentiert einen Dateninhalt 11 (vgl. Fig. 2) in einer maschinenlesbaren Form. Der Dateninhalt 11 umfasst Nutzdaten 12 und Kontrolldaten 13.

Die Nutzdaten 12 umfassen beispielsweise den Feldinhalt der Felder "Dokumentart" 3, "Nummer" 4, "Nachname" 5 und "Vorname" 6 (zusammengefasst als so genannte Machine Readable ZONE, "MRZ" 14) sowie die Bilddaten 15 des Porträts 2. Der Feldinhalt des Felds "Geburtsdatum" 7 ist in diesem Beispiel nicht Teil der Nutzdaten 12. Weitere mögliche Feldinhalte sind z.B. das Geschlecht der identifizierten Person, ein Gültigkeitsdatum des Identitätsdokuments und eine Signatur-ID.

Die Signatur-ID dient zur Identifikation um welchen Dokumenttyp es sich handelt (z.B. Personalausweis oder Pass), um welche Dokumentversion es sich handelt (Personalausweis der Generation n enthält unter Umständen andere Sicherheitsfeatures als die Generation n+1) und welches Signaturverfahren Verwendung fand.

Die Machine Readable ZONE (MRZ) fasst nach ICAO Richtlinien alle wichtigen Daten des Dokuments bzw. Dokumentinhabers zusammen. Durch Standardisierung ist die MRZ weltweit maschinell auslesbar, wobei die MRZ nicht als grafischer Code vorliegt, sondern als alphanumerisches Textfeld.

Der Name des Dokumentinhabers ist unter Umständen mit mehr Information behaftet, als in der MRZ dargestellt. In der MRZ können lange Namen abgeschnitten werden; darüber hinaus werden in der MRZ keine Titel angeführt und "Sonderzeichen" (z.B. Buchstaben mit diakritischen Zeichen) transliteriert. Durch Beigabe des Namens in den Dateninhalt des QR-Codes können dem Anwender der Ausleseapplikation diese Informationen angenehm und korrekt dargestellt übergegeben werden. Zum Beispiel können so schnell Benutzerkonten erstellt werden und der Name des Dokumentinhabers ist korrekt angelegt. Je nach Anwendungszweck und (Sprach-)Region können unterschiedlichste Zeichen codiert werden. Je mehr unterschiedliche Zeichen unterstützt werden sollen, desto mehr muss man sich utf-8 annähern; dadurch steigt allerdings der Platzbedarf. Gegebenenfalls muss zwischen Bildqualität der Portrait-Bilddaten und Darstellbarkeit von Sonderzeichen abgewogen werden (kleineres Bild für Sonderzeichen im Namen).

Das Bild des Dokumentinhabers (z.B. als base64 formatiert) ist im Dateninhalt 11 des QR-Codes 10 untergebracht, um eine Verkettung zwischen dem Dokumentinhaber (der vor einem steht), dem Bild im Identitätsdokument (welches mit klassischen Sicherheitsmerkmalen geschützt ist) und dem Bild im QR-Code (welches dem Überprüfer z.B. in einer Applikation angezeigt werden kann) zu ermöglichen.

Die Kontrolldaten umfassen einen digitalen Schlüssel (auch "initial vector", "IV") 16, der unabhängig von den Nutzdaten ist, sowie auch von den nicht in den Nutzdaten enthaltenen Feldinhalten. Der Bildraum des digitalen Schlüssels 16 entspricht dem Bildraum jeder der für die Sicherung des Identitätsdokuments 1 und die Ermittlung eines Kontrollcodes 18 verwendeten Hashfunktionen. Die Kontrolldaten enthalten zusätzlich zu dem digitalen Schlüssel 16 eine kryptografische Signatur 17 von einem Aussteller des Identitätsdokuments über die Nutzdaten 12 und den digitalen Schlüssel 16. Darüber hinaus können die Kontrolldaten auch z.B. eine Prüfsumme und eine Identifikation eines Signatur-Zertifikats umfassen.

Bis zum Post-Quantum Zeitpunkt kann der Dateninhalt des QR-Codes mit der klassischen Signatur versiegelt werden. Mit Einsatz von Quanten-Computing kann die Signatur weggelassen werden und der QR Code kann mittels der Adresse und einer zentralen Adressdatenbank auf seine Authentizität geprüft werden. Durch das Beibehalten der Signatur im Barcode, bis zur Ablöse durch das Adressverfahren, ist eine Rückwärtskompatibilität zu bestehenden Prüfprozessen (durch asymmetrische Verfahren) gegeben.

Fig. 2 zeigt schematisch ein System 19 umfassend drei Identitätsdokumente 1, 20, 21 gemäß Fig. 1 und eine Datenbank 22. Die Identitätsdokumente 1, 20, 21 sind hier durch den im Zusammenhang mit Fig. 1 beschriebenen Dateninhalt 11 ihres jeweiligen QR-Codes 10 repräsentiert. Die Datenbank 22 speichert unter anderem drei den dargestellten Identitätsdokumenten 1, 20, 21 zugeordnete Datenblöcke 23, 24, 25 (in Fig. 2 entspricht eine Zeile einem Datenblock). Die Datenbank 22 kann zum Beispiel als permissioned public (oder private) ledger (gegebenenfalls auch distributed) gestaltet sein.

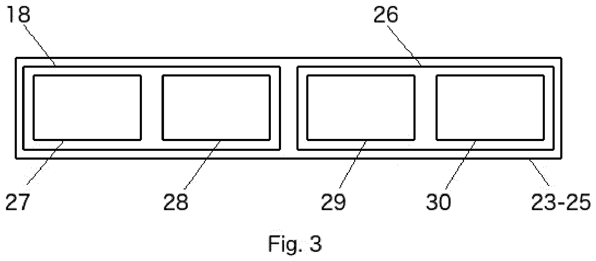

Wie genauer in Fig. 3 dargestellt ist, umfasst jeder Datenblock 23-25 einen Kontrollcode 18 ("Adresse A_i") und eine Referenz 26 ("H_i") auf die sich der jeweils nachfolgende Datenblock bezieht. Die Datenblöcke sind somit über die Referenzen 26 verkettet, jedoch nicht über die Kontrollcodes 18. Die Kontrollcodes 18 bestehen in diesem Beispiel aus zwei Codeabschnitten 27, 28. Die beiden Codeabschnitte 27, 28 wurden mittels jeweils verschiedener Hashfunktionen basierend auf verschiedenen Hash-Algorithmen ermittelt. Dazu wurden die betreffenden Hashfunktionen auf den in Fig. 2 dargestellten Dateninhalt 11 des dem Datenblock zugeordneten Identitätsdokuments 1, 20 bzw. 21 angewendet und die Ergebnisse, d.h. die beiden resultierenden Hashwerte, aneinandergehängt. Die Aneinanderreihung der mindestens zwei Codeabschnitte zu dem Kontrollcode wird auch als "Adresse" bezeichnet. Damit wird ausgedrückt, dass das Identitätsdokument anhand dieser Adresse eindeutig identifiziert werden kann. Die Referenzen 26 wurden ebenfalls mittels zweier verschiedener Hashfunktionen ermittelt, deren Ergebnisse 29, 30 aneinandergehängt wurden, wobei die Hashfunktionen auf eine Aneinanderreihung des Kontrollcodes 18 desselben Datenblocks und der Referenz 26 des vorangegangenen Datenblocks (d.h. Kontrollcode und Referenz) angewendet wurden. Der dem Dokument 1 zugeordnete Datenblock 24 mit dem (virtuellen) Zähler n in der Datenbank 22 enthält somit den aus dem Dateninhalt 11 des Dokuments 1 ermittelten Kontrollcode 18 in Form der Adresse A_n und die Referenz H_n, die aus Hashes über die Kombination von A_n mit der Referenz H_n-1 des vorangegangenen Datenblocks 23 ermittelt wurde. Der Zähler und die Referenz des vorangegangenen Datenblocks sind in Fig. 2 gestrichelt eingerahmt, um zu illustrieren, dass diese Spalten nicht, oder jedenfalls nicht notwendiger Weise, Teil der Datenblöcke und somit der Datenbank 22 sind.

Im Folgenden wird das Verfahren zur Sicherung eines persönlichen Identitätsdokuments 1 genauer erläutert, nach dem das System 19 in Fig. 2 erstellt wurde und erweitert wird. Im Rahmen dieses Verfahrens werden einerseits Identitätsdokumente 1 mit maschinenlesbaren grafischen Codes 9, im vorliegenden Beispiel QR-Codes 10, ausgestattet und andererseits die entsprechenden Datenblöcke 23-25 in der Datenbank 22 gespeichert.

Zur Erstellung der QR-Codes 10 wird zunächst der gewünschte Dateninhalt 11 eingegeben. Dieser umfasst die oben bereits beschriebenen Nutzdaten 12 und Kontrolldaten 13. D.h. es werden die Feldinhalte der betreffenden Felder des Identitätsdokuments 1 (z.B. in Form der MRZ 14, im ASCII Format, wobei der Name im utf-8 Format verwendet werden kann) und die Bilddaten 15 des Porträts (in binärem Format) eingegeben und es wird ein digitaler Schlüssel 16 erzeugt. Der digitale Schlüssel 16 wird zufällig erzeugt und ist einzigartig für jedes Identitätsdokument. Der digitale Schlüssel wird im QR-Code im base64 Format eingebettet. Optional können zusätzlich beispielsweise die kryptografische Signatur 17 und möglicherweise ein zugeordneter Zertifikatsidentifikator zum Dateninhalt 11 genommen werden. Aus diesem Dateninhalt 11 wird der QR-Code 10 erzeugt und auf das Identitätsdokument 1 aufgebracht, z.B. gedruckt oder gelasert.

Die für die Erstellung des QR-Codes 10 relevante Datengröße des Dateninhalts kann sich z.B. folgendermaßen zusammensetzen:

| Dateninhalt | | | Datengröße in byte |
|---|---|---|---|
| | Kontrolldaten: | | |
| | | Signatur | 184 |
| | | Schlüssel | 64 |

| | Nutzdaten: | | |
|---|---|---|---|
| | | Zertifikats-ID | 16 |
| | | MRZ | 123 |
| | | Vollständiger Name | 120 |
| | | Gesichtsbild | 1413 |
| Summe | | | 1800 |

Die Angaben zur Datengröße beziehen sich auf eine base64-Kodierung.

Parallel wird derselbe Dateninhalt 11 mit zwei verschiedenen Hashfunktionen basierend auf verschiedenen Hash-Algorithmen gehasht. Im Einzelnen wird aus dem Dateninhalt 11 ein Keyed-Hash Message Authentication Code (HMAC) ermittelt. Der HMAC bildet einen ersten Codeabschnitt 27 des dem neuen Identitätsdokument 1 zugeordneten Kontrollcodes 31. Zusätzlich wird aus dem Dateninhalt 11 ein KECCAK Message Authentication Code (KMAC) ermittelt. Der KMAC bildet einen zweiten Codeabschnitt 28 des diesem Identitätsdokument 1 zugeordneten Kontrollcodes 31. Bei der Ermittlung des HMAC bzw. des KMAC wird jeweils derselbe digitalen Schlüssel 16 als "secret key" K eingesetzt und derselbe übrige Dateninhalt 11 als "message" m. Als zugrunde liegende Hashfunktionen H werden Hashfunktionen mit einem übereinstimmenden Bildraum von 512 Bit verwendet, nämlich beim HMAC die Hashfunktion SHA2-512 und beim KMAC die Hashfunktion SHA3-512 (wird für den zweiten Teil ebenso HMAC benutzt, kann die genutzte Hashfunktion ebenfalls SHA3-512 sein). Die beiden Codeabschnitte 27, 28, HMAC und KMAC, werden anschließend aneinandergehängt und bilden so zusammen den neuen Kontrollcode 31.

Für die Erstellung eines neuen Datenblocks 32 in der Datenbank 22 wird neben dem neuen Kontrollcode 31 außerdem eine neue kryptografische Referenz 33 erstellt. Die neue Referenz 33 setzt sich wie die bestehenden Referenzen 26 aus zwei aneinandergehängten Hashwerten 29, 30 zusammen, wobei die beiden Hashwerte 29, 30 durch Anwendung zweier verschiedener Hashfunktionen auf den neuen Kontrollcode 31 und die letzte bereits in der Datenbank 22 existierende Referenz 26 (d.h. des zuletzt hinzugefügten Datenblocks) als "message" m ermittelt werden. Im vorliegenden Beispiel werden dafür konkret die Hashfunktionen SHA2-512 und SHA3-512 verwendet.

Anschließend wird mit der neu ermittelten Adresse (d.h. dem neuen Kontrollcode 31) und der neu ermittelten Referenz 33 ein neuer Datenblock 32 erstellt und in die als zentrales Register betriebene Datenbank 22 über ein Computernetzwerk hochgeladen und dort gespeichert, sodass nun dieser neue Datenblock 32 der letzte Datenblock in der Datenbank 22 ist. Um die Datenblöcke in der Datenbank 22 verifizierbar zu machen, speichert die Datenbank 22 optional auch die Reihenfolge der Datenblöcke, beispielsweise in Form eines Zählers 34. Die Datenbank 22 akzeptiert neue Datenblöcke nur von authentifizierten und entsprechend berechtigten Teilnehmern, beispielsweise der für die Ausstellung der Identitätsdokumente zuständigen Behörde.

Zur Initialisierung der Verkettung wird für die Ermittlung der Referenz 26 des ersten Datenblocks eine vordefinierte konstante "vorangegangene" Referenz ("H_genesis") 35 eingesetzt.

Zur Authentifizierung eines persönlichen Identitätsdokuments 1 gemäß Fig. 1 werden beispielsweise bei einer Ausweiskontrolle folgende Schritte durchgeführt:
- Auslesen und Ermitteln eines Dateninhalts 11 des QR-Codes 10;
- Berechnen von HMAC und KMAC auf Basis des übermittelten Dateninhalts 11 analog zum beschriebenen Verfahren bei der Ausweisausstellung;
- Verbindungsaufbau zur Datenbank 22 und Senden einer Abfrage, mit der ein Datenblock gesucht wird, dessen Kontrollcode 18 mit dem ermittelten Kontrollcode übereinstimmt;
- Bestätigen der Authentizität des Identitätsdokuments 1 wenn ein entsprechender Datenblock gefunden wird.

## Patentansprüche

1. Verfahren zur Sicherung eines persönlichen Identitätsdokuments (1), wobei das Identitätsdokument (1) mit einem maschinenlesbaren grafischen Code (9) ausgestattet wird, der einen Dateninhalt (11) repräsentiert, wobei der Dateninhalt (11) Nutzdaten (12) und Kontrolldaten (13) umfasst, wobei die Nutzdaten (12) mindestens einen Feldinhalt des Identitätsdokuments (1) umfassen, wobei zur Ermittlung eines Kontrollcodes (18) eine Hashfunktion zumindest auf die Nutzdaten (12) angewendet wird, **dadurch gekennzeichnet, dass** die Kontrolldaten (13) einen digitalen Schlüssel (16) umfassen, und dass der Kontrollcode (18) mindestens zwei Codeabschnitte (27, 28) aufweist, wobei zur Ermittlung der beiden Codeabschnitte (27, 28) jeweils verschiedene Hashfunktionen basierend auf verschiedenen mathematischen Algorithmen auf den Dateninhalt (11) angewendet werden.

2. Verfahren nach Anspruch 1, **dadurch gekennzeichnet, dass** mindestens einer der Codeabschnitte (27, 28) als Keyed-Hash Message Authentication Code ermittelt wird.

3. Verfahren nach Anspruch 1 oder 2, **dadurch gekennzeichnet, dass** mindestens einer der beiden Codeabschnitte (27, 28) als KECCAK Message Authentication Code ermittelt wird.

4. Verfahren nach einem der Ansprüche 1 bis 3, **dadurch gekennzeichnet, dass** ein Datenblock (31) umfassend den Kontrollcode (18) erstellt wird und der Datenblock (31) in einer Datenbank (22) gespeichert wird

5. Verfahren nach Anspruch 4, **dadurch gekennzeichnet, dass** die in der Datenbank (22) gespeicherten Datenblöcke (23, 24, 25) durch Nutzung von Hashwerten untereinander verkettet werden.

6. Verfahren nach Anspruch 4 oder 5, **dadurch gekennzeichnet, dass** die Datenbank (22) ein zentrales Register ist und das Speichern des Datenblocks (31) ein Hochladen des Datenblocks (31) über ein Computernetzwerk in das zentrale Register umfasst.

7. Verfahren nach einem der Ansprüche 1 bis 6, **dadurch gekennzeichnet, dass** die Kontrolldaten (13) mindestens eine kryptografische Signatur (17) eines Ausstellers des Identitätsdokuments (1) umfassen.

8. Verfahren nach einem der Ansprüche 1 bis 7, **dadurch gekennzeichnet, dass** die Nutzdaten (12) Bilddaten (15) eines Porträts einer durch das Identitätsdokument (1) identifizierten Person enthalten.

9. Identitätsdokument (1) zum Nachweis der Identität einer Person, wobei das Identitätsdokument (1) einen maschinenlesbaren grafischen Code (9) aufweist, der einen Dateninhalt (11) repräsentiert, wobei der Dateninhalt (11) Nutzdaten (12) und Kontrolldaten (13) umfasst, wobei die Nutzdaten (12) mindestens einen Feldinhalt des Identitätsdokuments (1) umfassen, **dadurch gekennzeichnet, dass** die Kontrolldaten (13) mindestens einen digitalen Schlüssel (16) umfassen, wobei der digitale Schlüssel (16) unabhängig von den Nutzdaten (12) ist, und dass dem Identitätsdokument (1) ein Kontrollcode (18) zugeordnet ist, der mindestens zwei Codeabschnitte (27, 28) aufweist, welche mittels jeweils verschiedener Hashfunktionen basierend auf verschiedenen mathematischen Algorithmen und angewendet auf den Dateninhalt (11) ermittelt wurden.

10. Identitätsdokument (1) nach Anspruch 9, **dadurch gekennzeichnet, dass** der Bildraum des digitalen Schlüssels (16) dem Bildraum mindestens einer für die Sicherung des Identitätsdokuments (1) verwendbaren Hashfunktion entspricht.

11. Identitätsdokument (1) nach einem der Ansprüche 9 bis 10, **dadurch gekennzeichnet, dass** die Kontrolldaten (13) mindestens eine kryptografische Signatur (17) eines Ausstellers des Identitätsdokuments (1) umfassen.

12. Identitätsdokument (1) nach einem der Ansprüche 9 bis 11, **dadurch gekennzeichnet, dass** die Nutzdaten (12) Bilddaten (15) eines Porträts einer durch das Identitätsdokument (1) identifizierten Person enthalten.

13. System (19) umfassend mindestens ein Identitätsdokument (1) nach einem der Ansprüche 9 bis 12 und eine Datenbank (22), wobei die Datenbank (22) einen dem mindestens einen Identitätsdokument (1) zugeordneten Datenblock (24) speichert, wobei der Datenblock (24) den Kontrollcode (18) umfasst.

14. System (19) nach Anspruch 13, **dadurch gekennzeichnet, dass** die in der Datenbank (22) gespeicherten Datenblöcke (24, 25, 26) durch Nutzung von Hashwerten untereinander verkettet sind.

15. Verfahren zur Authentifizierung eines persönlichen Identitätsdokuments (1), das Verfahren umfassend die Schritte:
- Auslesen und Ermitteln eines Dateninhalts (11) eines maschinenlesbaren grafischen Codes (9) des Identitätsdokuments (1), wobei der Dateninhalt (11) Nutzdaten (12) und Kontrolldaten (13) umfasst, wobei die Nutzdaten (12) mindestens einen Feldinhalt des Identitätsdokuments (1) umfassen und wobei die Kontrolldaten (13) einen digitalen Schlüssel (16) umfassen;
- Ermitteln eines Kontrollcodes (18) mit mindestens zwei Codeabschnitten (27, 28), wobei zur Ermittlung der beiden Codeabschnitte (27, 28) jeweils verschiedene Hashfunktionen basierend auf verschiedenen Hash-Algorithmen auf den Dateninhalt (11) angewendet werden;
- Feststellen der Existenz des ermittelten Kontrollcodes (18) in einer Datenbank (22);
- Bestätigen der Authentizität des Identitätsdokuments (1) auf Basis der festgestellten Existenz.

## Claims

1. Method for securing a personal identity document (1), wherein the identity document (1) is provided with a machine-readable graphic code (9) that represents a data content (11), wherein the data content (11) comprises payload data (12) and control data (13), wherein the payload data (12) comprises at least one field content of the identity document (1), wherein a hash function is applied at least to the payload data (12) for determining a control code (18), **characterized in that** the control data (13) comprises a digital key (16), and that the control code (18) has at least two code sections (27, 28), wherein for determining the two code sections (27, 28) respectively different hash functions based on different mathematical algorithms are applied to the data content (11).

2. Method according to claim 1, **characterized in that** at least one of the code sections (27, 28) is determined as a Keyed-Hash Message Authentication Code.

3. Method according to claim 1 or 2, **characterized in that** at least one of the two code sections (27, 28) is determined as a KECCAK Message Authentication Code.

4. Method according to any one of claims 1 to 3, **characterized in that** a data block (31) comprising the control code (18) is created and the data block (31) is stored in a database (22).

5. Method according to claim 4, **characterized in that** the data blocks (23, 24, 25) stored in the database (22) are chained to one another by utilizing hash values.

6. Method according to claim 4 or 5, **characterized in that** the database (22) is a central register and the storing of the data block (31) comprises an uploading of the data block (31) via a computer network into the central register.

7. Method according to any one of claims 1 to 6, **characterized in that** the control data (13) comprises at least one cryptographic signature (17) of an issuer of the identity document (1).

8. Method according to any one of claims 1 to 7, **characterized in that** the payload data (12) contains image data (15) of a portrait of a person identified by the identity document (1).

9. Identity document (1) for proving the identity of a person, wherein the identity document (1) has a machine-readable graphic code (9) that represents a data content (11), wherein the data content (11) comprises payload data (12) and control data (13), wherein the payload data (12) comprises at least one field content of the identity document (1), **characterized in that** the control data (13) comprises at least one digital key (16), wherein the digital key (16) is independent of the payload data (12), and that the identity document (1) is assigned a control code (18) that has at least two code sections (27, 28), which were determined by means of respectively different hash functions based on different mathematical algorithms and applied to the data content (11).

10. Identity document (1) according to claim 9, **characterized in that** the image space of the digital key (16) corresponds to the image space of at least one hash function usable for securing the identity document (1).

11. Identity document (1) according to any one of claims 9 to 10, **characterized in that** the control data (13) comprises at least one cryptographic signature (17) of an issuer of the identity document (1).

12. Identity document (1) according to any one of claims 9 to 11, **characterized in that** the payload data (12) contains image data (15) of a portrait of a person identified by the identity document (1).

13. System (19) comprising at least one identity document (1) according to any one of claims 9 to 12 and a database (22), wherein the database (22) stores a data block (24) assigned to the at least one identity document (1), wherein the data block (24) comprises the control code (18).

14. System (19) according to claim 13, **characterized in that** the data blocks (24, 25, 26) stored in the database (22) are chained to one another by utilizing hash values.

15. Method for authenticating a personal identity document (1), the method comprising the steps:
- Reading out and determining a data content (11) of a machine-readable graphic code (9) of the identity document (1), wherein the data content (11) comprises payload data (12) and control data (13), wherein the payload data (12) comprises at least one field content of the identity document (1) and wherein the control data (13) comprises a digital key (16);
- Determining a control code (18) with at least two code sections (27, 28), wherein for determining the two code sections (27, 28) respectively different hash functions based on different hash algorithms are applied to the data content (11);
- Establishing the existence of the determined control code (18) in a database (22);
- Confirming the authenticity of the identity document (1) on the basis of the established existence.

## Revendications

1. Procédé de sécurisation d'un document d'identité personnel (1), dans lequel le document d'identité (1) est équipé d'un code graphique lisible par machine (9) qui représente un contenu de données (11), dans lequel le contenu de données (11) comprend des données utiles (12) et des données de contrôle (13), dans lequel les données utiles (12) comprennent au moins un contenu de champ du document d'identité (1), dans lequel une fonction de hachage est appliquée au moins aux données utiles (12) pour déterminer un code de contrôle (18), **caractérisé en ce que** les données de contrôle (13) comprennent une clé numérique (16), et **en ce que** le code de contrôle (18) présente au moins deux sections de code (27, 28), dans lequel pour la détermination des deux sections de code (27, 28), des fonctions de hachage respectivement différentes basées sur des algorithmes mathématiques différents sont appliquées au contenu de données (11).

2. Procédé selon la revendication 1, **caractérisé en ce qu'** au moins une des sections de code (27, 28) est déterminée en tant que code d'authentification de message à hachage à clé.

3. Procédé selon la revendication 1 ou 2, **caractérisé en ce qu'** au moins une des deux sections de code (27, 28) est déterminée en tant que code d'authentification de message KECCAK.

4. Procédé selon l'une des revendications 1 à 3, **caractérisé en ce qu'** un bloc de données (31) comprenant le code de contrôle (18) est créé et le bloc de données (31) est stocké dans une base de données (22).

5. Procédé selon la revendication 4, **caractérisé en ce que** les blocs de données (23, 24, 25) stockés dans la base de données (22) sont chaînés entre eux par l'utilisation de valeurs de hachage.

6. Procédé selon la revendication 4 ou 5, **caractérisé en ce que** la base de données (22) est un registre central et le stockage du bloc de données (31) comprend un téléchargement du bloc de données (31) vers le registre central via un réseau informatique.

7. Procédé selon l'une des revendications 1 à 6, **caractérisé en ce que** les données de contrôle (13) comprennent au moins une signature cryptographique (17) d'un émetteur du document d'identité (1).

8. Procédé selon l'une des revendications 1 à 7, **caractérisé en ce que** les données utiles (12) contiennent des données d'image (15) d'un portrait d'une personne identifiée par le document d'identité (1).

9. Document d'identité (1) pour la preuve de l'identité d'une personne, dans lequel le document d'identité (1) présente un code graphique lisible par machine (9) qui représente un contenu de données (11), dans lequel le contenu de données (11) comprend des données utiles (12) et des données de contrôle (13), dans lequel les données utiles (12) comprennent au moins un contenu de champ du document d'identité (1), **caractérisé en ce que** les données de contrôle (13) comprennent au moins une clé numérique (16), dans lequel la clé numérique (16) est indépendante des données utiles (12), et **en ce que** le document d'identité (1) est associé à un code de contrôle (18) qui présente au moins deux sections de code (27, 28), lesquelles ont été déterminées au moyen de fonctions de hachage respectivement différentes basées sur des algorithmes mathématiques différents et appliquées au contenu de données (11).

10. Document d'identité (1) selon la revendication 9, **caractérisé en ce que** l'espace image de la clé numérique (16) correspond à l'espace image d'au moins une fonction de hachage utilisable pour la sécurisation du document d'identité (1).

11. Document d'identité (1) selon l'une des revendications 9 à 10, **caractérisé en ce que** les données de contrôle (13) comprennent au moins une signature cryptographique (17) d'un émetteur du document d'identité (1).

12. Document d'identité (1) selon l'une des revendications 9 à 11, **caractérisé en ce que** les données utiles (12) contiennent des données d'image (15) d'un portrait d'une personne identifiée par le document d'identité (1).

13. Système (19) comprenant au moins un document d'identité (1) selon l'une des revendications 9 à 12 et une base de données (22), dans lequel la base de données (22) stocke un bloc de données (24) associé au moins à un document d'identité (1), dans lequel le bloc de données (24) comprend le code de contrôle (18).

14. Système (19) selon la revendication 13, **caractérisé en ce que** les blocs de données (24, 25, 26) stockés dans la base de données (22) sont chaînés entre eux par l'utilisation de valeurs de hachage.

15. Procédé d'authentification d'un document d'identité personnel (1), le procédé comprenant les étapes :
- Lecture et détermination d'un contenu de données (11) d'un code graphique lisible par machine (9) du document d'identité (1), dans lequel le contenu de données (11) comprend des données utiles (12) et des données de contrôle (13), dans lequel les données utiles (12) comprennent au moins un contenu de champ du document d'identité (1) et dans lequel les données de contrôle (13) comprennent une clé numérique (16) ;
- Détermination d'un code de contrôle (18) avec au moins deux sections de code (27, 28), dans lequel pour la détermination des deux sections de code (27, 28), des fonctions de hachage respectivement différentes basées sur des algorithmes de hachage différents sont appliquées au contenu de données (11) ;
- Constatation de l'existence du code de contrôle (18) déterminé dans une base de données (22) ;
- Confirmation de l'authenticité du document d'identité (1) sur la base de l'existence constatée.
